# DEMANDE DE BREVET EUROPEEN

(11) **EP 2 925 035 A1**
(43) Date de publication de la demande: **30.09.2015**
(21) Numéro de dépôt: 14305420.3
(22) Date de dépôt: 24.03.2014
(51) Int. Cl.: H04W 12/06, H04L 29/06, H04W 4/00

(54) **Procédé d'activation et de désactivation d'une application dans un terminal de télécommunications comprenant un élément sécurisé et un lecteur biométrique et serveur correspondant**

(71) Demandeur: Gemalto SA, 92190 Meudon (FR)
(72) Inventeur: Azoulai, Jonathan, 13705 La Ciotat (FR); Bouvier, Arnaud, 13705 La Ciotat (FR)

(57) **Abrégé**

L'invention concerne notamment un procédé d'activation d'une application dans un terminal de télécommunications (10) comprenant un élément sécurisé et un lecteur biométrique (12), le lecteur biométrique (12) ayant pour fonction d'authentifier l'utilisateur du terminal de télécommunications (10) pour valider une opération.

Selon l'invention, le procédé consiste à :
- Transmettre du terminal de télécommunications (10) à un serveur distant (11) une demande d'installation de l'application ;
- Transmettre du serveur distant (11) au terminal de télécommunications (10) l'application sans activation de l'application ;
- Stocker dans l'élément sécurisé une donnée biométrique de l'utilisateur du terminal de télécommunications à l'aide du lecteur biométrique (12) ;
- Transmettre du terminal de télécommunications (10) au serveur distant (11) une confirmation de stockage de la donnée biométrique dans l'élément sécurisé pour l'application ;
- Transmettre du serveur distant (11) au terminal de télécommunications (10) une commande d'activation de l'application.

## Description

Le domaine de l'invention est celui des télécommunications et concerne un procédé permettant d'activer et de désactiver une application dans un terminal de télécommunications comprenant un élément sécurisé et un lecteur biométrique. L'invention concerne également un serveur permettant d'activer une telle application.

Un terminal de télécommunications selon la présente invention est typiquement un terminal portable, tel qu'un téléphone, un smartphone ou un PDA. II peut également s'agir d'un modem embarqué dans une machine, tel qu'un distributeur de boissons ou un véhicule (pour les applications M2M).

Un tel terminal comporte classiquement un élément sécurisé, tel qu'une carte Sim, un UICC ou un UICC embarqué (c'est-à-dire non extractible du terminal), un eSE (Embedded Secure element) destiné premièrement à authentifier l'utilisateur du terminal au niveau du réseau de télécommunications (procédure GPA) ou une carte micro SD par exemple.

Un terminal selon la présente invention comporte un lecteur biométrique, tel qu'un lecteur d'empreintes digitales, une caméra pour effectuer une reconnaissance faciale ou une reconnaissance d'iris par exemple.

Le terminal ou l'élément sécurisé comportent des applications de différents types : il existe classiquement des applications de jeu, de messagerie, d'écoute de musiques, de localisation GPS, d'accès à Internet, de téléchargement d'applications, ... II existe également des applications plus sensibles, telles que des applications de paiement par exemple, d'accès à des sites Internet payants, d'activation de systèmes d'alarme, d'accès à des locaux,...

Lorsque des applications sensibles sont installées dans un terminal ou dans un élément sécurisé, un problème se pose lorsque le terminal est volé : le voleur peut alors effectuer des paiements, par exemple de type NFC, à l'aide du terminal volé, au moins pour des petits montants qui ne nécessitent pas la saisie d'un code PIN (en général pour des montants inférieurs à 20 Euros).

Par ailleurs, la saisie d'un code PIN par l'utilisateur, par exemple pour valider un paiement NFC, est fastidieuse. C'est pourquoi il est préférable d'authentifier l'utilisateur à l'aide d'un capteur biométrique : il peut alors réaliser un paiement en approchant simplement son terminal, pourvu d'une application de paiement NFC, d'un lecteur NFC, après avoir apposé un de ses doigts sur le capteur biométrique (dans le cas d'un capteur d'empreintes digitales). L'empreinte lue est comparée avec une empreinte de référence préalablement stockée dans l'élément sécurisé et, en cas d'identité des empreintes, le paiement NFC est autorisé. Ceci permet d'assurer que le paiement est réalisé par le propriétaire du terminal et non pas par un voleur de ce terminal (ou par une personne ayant trouvé le terminal égaré).

Le capteur biométrique peut également être utilisé pour déverrouiller le terminal, par exemple après sa mise sous tension (en lieu et place de l'entrée d'un code PIN), comme cela existe par exemple sur le smartphone Nokia 5S (marque déposée).

Le problème que se propose de résoudre la présente invention est de permettre à un utilisateur de s'enregistrer (« enrol » en anglais) auprès d'un fournisseur de services, tel qu'un opérateur radiotéléphonique ou un TSM (« Trusted Service Manager » en anglais, « Fournisseur de services de confiance » en français), pour obtenir une application, telle que par exemple une application de paiement NFC, cette application nécessitant la capture d'une donnée biométrique de l'utilisateur pour pouvoir être ultérieurement exécutée.

A cet effet, la présente invention propose un procédé d'activation d'une application dans un terminal de télécommunications comprenant un élément sécurisé et un lecteur biométrique, le lecteur biométrique ayant pour fonction d'authentifier l'utilisateur du terminal de télécommunications pour valider une opération, ce procédé consistant à :
- Transmettre du terminal de télécommunications à un serveur distant une demande d'installation de l'application ;
- Transmettre du serveur distant au terminal de télécommunications l'application sans activation de l'application ;
- Stocker dans l'élément sécurisé une donnée biométrique de l'utilisateur du terminal de télécommunications à l'aide du lecteur biométrique ;
- Transmettre du terminal de télécommunications au serveur distant une confirmation de stockage de la donnée biométrique dans l'élément sécurisé pour l'application ;
- Transmettre du serveur distant au terminal de télécommunications une commande d'activation de l'application.

L'invention concerne également un procédé de désactivation d'une application dans un terminal de télécommunications comprenant un élément sécurisé et un lecteur biométrique, le lecteur biométrique ayant pour fonction d'authentifier l'utilisateur du terminal de télécommunications pour valider une opération, ce procédé consistant à :
- Lire une donnée biométrique de l'utilisateur du terminal de télécommunications à l'aide du lecteur biométrique ;
- Comparer dans l'élément sécurisé si la donnée biométrique lue est identique à une donnée biométrique préalablement stockée dans l'élément sécurisé et, en cas d'identité entre lesdites données biométriques, désinstaller l'application dans le terminal de télécommunications.

Avantageusement, après l'étape de désinstallation de l'application dans le terminal de télécommunications, le procédé consiste à transmettre du terminal de télécommunications au serveur distant une information de désinstallation de l'application.

L'application est avantageusement une application NFC, par exemple une application de paiement.

Le lecteur biométrique est préférentiellement un lecteur d'empreintes digitales.

Dans un mode de mise en oeuvre avantageux, le terminal de télécommunications est un téléphone.

Le serveur distant peut être une plate-forme OTA ou un TSM.

De préférence, l'application est installée dans l'élément sécurisé.

L'invention concerne également un serveur destiné à activer une application dans un terminal de télécommunications comprenant un élément sécurisé et un lecteur biométrique, le lecteur biométrique ayant pour fonction d'authentifier l'utilisateur du terminal de télécommunications pour valider une opération, ce serveur comprenant des moyens pour :
- Recevoir du terminal de télécommunications une demande d'installation de l'application ;
- Transmettre au terminal de télécommunications l'application sans activation de l'application ;
- Recevoir du terminal de télécommunications une confirmation de stockage d'une donnée biométrique de l'utilisateur dans l'élément sécurisé pour l'application ;
- Transmettre au terminal de télécommunications une commande d'activation de l'application.

D'autres caractéristiques et avantages de l'invention apparaîtront à la lecture de la description suivante d'un mode de mise en oeuvre préférentiel, donné à titre illustratif et non limitatif, et des dessins annexés dans lesquels :
- La figure 1 représente les différentes étapes d'activation d'une application dans un terminal de télécommunications comprenant un élément sécurisé et un lecteur biométrique ;
- La figure 2 représente les différentes étapes de désactivation d'une application dans un terminal de télécommunications comprenant un élément sécurisé et un lecteur biométrique.

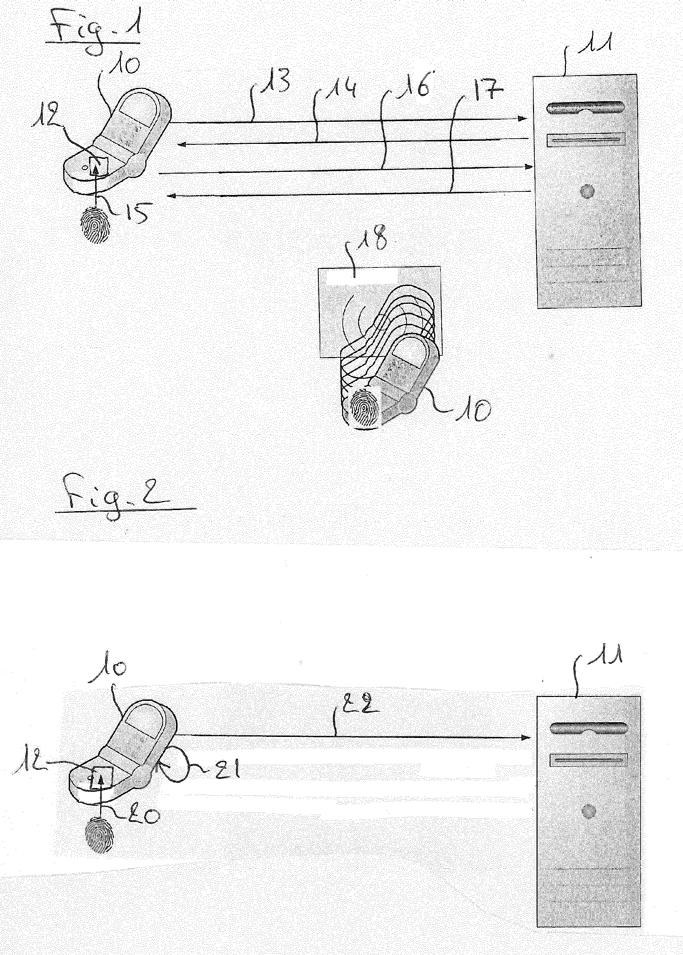

La figure 1 représente les différentes étapes d'activation d'une application dans un terminal de télécommunications comprenant un élément sécurisé et un lecteur biométrique.

Dans cette figure, un terminal de télécommunications 10 est apte à communiquer à distance avec un serveur distant 11. La communication est de type hertzienne (https par exemple). Le terminal 10 comprend un lecteur biométrique 12, ici constitué par un capteur d'empreintes digitales, ainsi qu'un élément sécurisé non représenté. Le lecteur biométrique 12 a pour fonction d'authentifier l'utilisateur du terminal 10 pour valider une opération (paiement, contrôle d'accès, passage à un tourniquet d'accès à une station de métro, déverrouillage du terminal 10,...).

Le serveur 11 est apte à fournir au terminal 10, de préférence à son élément sécurisé, une application qui ne sera exécutable que si l'utilisateur du terminal 10 se sera préalablement authentifié auprès de son terminal 10 à l'aide de sa donnée biométrique.

Le procédé selon l'invention est le suivant :

Lors d'une étape 13 commence une phase d'enregistrement pendant laquelle le terminal 10 transmet au serveur 11 une demande d'installation de l'application. Dans un exemple de mode de mise en oeuvre préférentiel, cette application est une application de paiement NFC. Cet exemple sera utilisé dans la suite de cette description.

Le canal de communication entre le terminal 10 et le serveur 11 est un canal sécurisé.

Le serveur 11 répond à la requête en transmettant, lors d'une étape 14, au terminal 10, l'application de paiement NFC sans activation de cette application. L'application est donc présente dans le terminal 10 (dans le terminal même ou dans son élément sécurisé) mais non opérationnelle et donc non exécutable. On pourrait également la considérer comme étant verrouillée.

Lors d'une étape 15, l'utilisateur du terminal 10 est invité à entrer une donnée biométrique dans l'élément sécurisé. Celui-ci, dans le cas d'une empreinte digitale telle que représentée, appose un de ses doigts sur le capteur d'empreinte digitale 12 qui stocke cette empreinte dans l'élément sécurisé.

Lors d'une étape 16, le terminal 10 transmet au serveur 11 une confirmation de stockage de l'empreinte digitale dans l'élément sécurisé pour l'application de paiement NFC reçue à l'étape 14.

Le serveur 11 transmet alors, lors d'une étape 17, au terminal 10 une commande d'activation de l'application NFC. L'application est alors opérationnelle (elle a été débloquée) et peut être exécutée.

Dans le cadre de l'exemple précité, l'utilisateur peut dès lors approcher son terminal 10 d'un lecteur NFC 18 pour effectuer un paiement, après avoir posé son doigt sur le capteur 12 pour s'authentifier. L'élément sécurisé vérifie que l'empreinte lue pour effectuer le paiement est bien identique à celle préalablement mémorisée lors de l'étape 15.

L'invention permet donc d'activer une application dans un terminal de télécommunications en garantissant que seul le propriétaire de ce terminal sera apte à utiliser cette application en s'authentifiant par une donnée biométrique (afin d'effectuer une opération).

L'invention concerne également un procédé de désactivation d'une application dans un terminal de télécommunications comprenant un élément sécurisé et un lecteur biométrique, tel que décrit en référence à la figure 2.

Dans cette figure, après avoir choisi l'application à désinstaller, lors d'une étape 20, l'utilisateur appose le doigt qu'il utilise pour s'authentifier sur le capteur biométrique 12. Son empreinte est lue par le capteur 12 et est comparée dans l'élément sécurisé avec celle stockée lors de l'étape 15 de la figure 1.

Si les deux empreintes sont identiques, cela signifie que l'utilisateur qui a installé l'application est bien celui qui demande sa désinstallation. En cas d'identité entre les deux données biométriques, l'application est désinstallée dans le terminal 10 (étape 21) et n'est donc plus opérationnelle.

A titre facultatif, après l'étape de désinstallation 21 de l'application, le terminal peut transmettre, lors d'une étape 22, au serveur 11 une information de désinstallation de l'application. Le serveur 11 a alors la connaissance que l'application n'est plus résidente dans le terminal 10 ou dans son élément sécurisé.

Afin de mettre en oeuvre le procédé d'activation d'une application selon l'invention, un logiciel peut être au préalable téléchargé par le terminal 10. Ce logiciel a notamment pour fonctions de gérer la réception de l'application (étape 14 de la figure 1) et de vérifier qu'une donnée biométrique de l'utilisateur a bien été stockée dans l'élément sécurisé, avant de transmettre (étape 16 de la figure 1) au serveur 11 une confirmation de stockage de la donnée biométrique dans l'élément sécurisé pour l'application reçue à l'étape 14.

Ce logiciel peut aussi être natif dans l'élément sécurisé ou chargé lors de l'étape 14 avant de transmettre l'application souhaitée.

II en va de même pour le logiciel chargé de désinstaller l'application (figure 2).

L'application activée ou désactivée dans le terminal 10 ou dans son élément de sécurité est de préférence une application NFC, par exemple une application de paiement, mais toute autre application nécessitant la reconnaissance d'une donnée biométrique peut être activée ou désactivée selon le procédé de l'invention.

Le lecteur est préférentiellement un lecteur d'empreintes digitales mais une caméra peut également assurer la saisie d'une donnée biométrique de l'utilisateur (reconnaissance de facies ou d'iris par exemple).

Le serveur 11 peut être une plate-forme OTA d'un opérateur de radiotéléphonie mobile ou un TSM (Trusted Service Manager). II peut également s'agir d'un site dédié à fournir des applications spécifiques (un site bancaire pour des applications bancaires, un site d'un vendeur d'alarmes domestiques pour des applications domotiques telles que l'activation ou la désactivation d'une alarme, un site d'une entreprise pour donner accès à ses établissements,...).

L'invention concerne également un serveur destiné à activer une application dans un terminal de télécommunications 10 comprenant un élément sécurisé et un lecteur biométrique 12, le lecteur biométrique ayant pour fonction d'authentifier l'utilisateur du terminal de télécommunications pour valider une opération, ce serveur comprenant des moyens pour :
- Recevoir (étape 13) du terminal de télécommunications 10 une demande d'installation de l'application ;
- Transmettre (étape 14) au terminal de télécommunications 10 l'application sans activation de l'application ;
- Recevoir (étape 16) du terminal de télécommunications 10 une confirmation de stockage d'une donnée biométrique de l'utilisateur dans l'élément sécurisé pour cette application ;
- Transmettre au terminal de télécommunications 10 une commande d'activation de l'application.

## Revendications

1. Procédé d'activation d'une application dans un terminal de télécommunications (10) comprenant un élément sécurisé et un lecteur biométrique (12), ledit lecteur biométrique (12) ayant pour fonction d'authentifier l'utilisateur dudit terminal de télécommunications (10) pour valider une opération, **caractérisé en ce qu'**il consiste à :
- Transmettre dudit terminal de télécommunications (10) à un serveur distant (11) une demande d'installation de ladite application ;
- Transmettre dudit serveur distant (11) audit terminal de télécommunications (10) ladite application sans activation de ladite application ;
- Stocker dans ledit élément sécurisé une donnée biométrique de l'utilisateur dudit terminal de télécommunications à l'aide dudit lecteur biométrique (12) ;
- Transmettre dudit terminal de télécommunications (10) audit serveur distant (11) une confirmation de stockage de ladite donnée biométrique dans ledit élément sécurisé pour ladite application ;
- Transmettre dudit serveur distant (11) audit terminal de télécommunications (10) une commande d'activation de ladite application.

2. Procédé de désactivation d'une application dans un terminal de télécommunications (10) comprenant un élément sécurisé et un lecteur biométrique (12), ledit lecteur biométrique (12) ayant pour fonction d'authentifier l'utilisateur dudit terminal de télécommunications (10) pour valider une opération, **caractérisé en ce qu'**il consiste à :
- Lire une donnée biométrique de l'utilisateur dudit terminal de télécommunications (10) à l'aide dudit lecteur biométrique (12) ;
- Comparer dans ledit élément sécurisé si la donnée biométrique lue est identique à une donnée biométrique préalablement stockée dans ledit élément sécurisé et, en cas d'identité entre lesdites données biométriques, désinstaller ladite application dans ledit terminal de télécommunications (10).

3. Procédé selon la revendication 2, **caractérisé en ce qu'**il consiste, après l'étape de désinstallation de ladite application dans ledit terminal de télécommunications (10), à transmettre dudit terminal de télécommunications (10) audit serveur distant (11) une information de désinstallation de ladite application.

4. Procédé selon l'une des revendications 1 à 3, **caractérisé en ce que** ladite application est une application NFC.

5. Procédé selon l'une des revendications 1 à 4, **caractérisé en ce que** ladite application est une application de paiement.

6. Procédé selon l'une des revendications 1 à 5, **caractérisé en ce que** ledit lecteur biométrique est un lecteur d'empreintes digitales (12).

7. Procédé selon l'une des revendications 1 à 6, **caractérisé en ce que** ledit terminal de télécommunications (10) est un téléphone.

8. Procédé selon l'une des revendications 1 à 7, **caractérisé en ce que** ledit serveur distant (11) est une plate-forme OTA ou un TSM (Trusted Service Manager).

9. Procédé selon l'une des revendications 1 à 8, **caractérisé en ce que** ladite application est installée dans ledit élément sécurisé.

10. Serveur destiné à activer une application dans un terminal de télécommunications (10) comprenant un élément sécurisé et un lecteur biométrique (12), ledit lecteur biométrique (12) ayant pour fonction d'authentifier l'utilisateur dudit terminal de télécommunications (10) pour valider une opération, **caractérisé en ce qu'**il comprend des moyens pour :
- Recevoir (13) dudit terminal de télécommunications (10) une demande d'installation de ladite application ;
- Transmettre (14) audit terminal de télécommunications (10) ladite application sans activation de ladite application ;
- Recevoir (16) dudit terminal de télécommunications (10) une confirmation de stockage d'une donnée biométrique dudit utilisateur dans ledit élément sécurisé pour ladite application ;
- Transmettre audit terminal de télécommunications (10) une commande d'activation de ladite application.
